# EUROPEAN PATENT APPLICATION

(11) **EP 2 263 802 A1**
(43) Date of publication of application: **22.12.2010**
(21) Application number: 10160680.4
(22) Date of filing: 22.04.2010
(51) Int. Cl.: B01L 9/00, G01N 35/02

(54) **System and method for dispensing fluids**

(30) Priority: 25.05.2009 EP 09161044
(71) Applicant: F. Hoffmann-La Roche AG, 4070 Basel (CH); Roche Diagnostics GmbH, 68305 Mannheim (DE)
(72) Inventor: Sarofim, Emad, 6332, Hagendorn (CH); Kopp, Martin, 6333, Hünenberg See (CH); Cherubini, Claudio, 6330, Cham (CH)
(74) Representative: Gebauer, Dieter Edmund

(57) **Abstract**

The present invention pertains to a system for dispensing one or more fluids into wells of a target multi-well plate, comprising a holder for holding said multi-well plate in a predefined holding position, said plate having a well region provided with plural wells for accommodating said fluids and an edge region surrounding said well region, said holder including: a contact area adapted to contact said edge region for forming a sealing zone air-tightly sealing a void formed between said holder and said plate; at least one supporting face adapted to support said well region in a planar condition; a duct for connection to a pump for generating a negative pressure in said void so as to draw said well region onto said at least one supporting face. It further relates to such holder. It yet further relates to a method for dispensing fluids into wells of a target multi-well plate, comprising the following steps of: providing such holder and a multi-well plate in holding position and generating a negative pressure in said void so as to pull said well region onto said at least one supporting face.

## Description

### TECHNICAL FIELD

The present invention concerns a system and method for the automated dispensing of fluids into wells of a target multi-well plate.

### BACKGROUND OF THE INVENTION

In light of an ongoing increase in the clinical analysis of body fluids, many efforts have been made to develop new automated pipetting instruments enabling plural pipetting operations in parallel which typically involve the use of multi-well plates. Multi-well plates provide plural wells for receiving fluids which are regularly arranged in two-dimensional arrays made up of columns and rows intersecting each other at right angles. Intended for single-use only, plastic-made multi-well plates are industrially produced in large numbers within the limits of certain tolerances of planarity so that they may exhibit a slightly convex or concave upper face. While such variances may be regarded uncritical in case of multi-well plates provided with a comparably low number of wells, in case of multi-well plates having large arrays, due to the normally lower distances in-between adjacent wells, problems with pipetting operations can arise. The non-even plates may, e.g., entail unintentional contacts between pipettes and wells which can go along with an enlarged risk of cross-contamination of the samples. Furthermore increased errors in pipetting operations may occur.

In light of the foregoing, it is an object of the invention to provide an improved system and method for the dispensing of one or more fluids into wells of a multi-well plate. This object is met by a system and a method according to the independent claims. Preferred embodiments of the invention are given by the features of the dependent claims.

### SUMMARY OF THE INVENTION

According to a first aspect of the invention, a new system for the automated dispensing of one or more fluids into wells of at least one target multi-well plate is proposed. The system of the invention can be configured in various ways in accordance with specific demands of the user. It may, e.g., be used for analyzing liquid samples. Fluids for dispensing by the system of the invention may include biological fluids such as blood, serum, urine, cerebrospinal fluids and nucleic acid containing fluids, non-biological fluids such as chemical compounds and drugs, and any other fluid of interest as long as dispensing thereof involves the use of multi-well plates.

According to the invention, the system comprises a holder adapted for holding at least one target multi-well plate in a predefined holding position. The multi-well plate which is not a part of the system of the invention, however, optionally can be a part thereof, has a first region, in the following denoted as "well region", which is provided with a plurality of wells for receiving fluids that are regularly arranged in a two-dimensional array and a second region, in the following denoted as "edge region", surrounding the well region like a frame.

The holder has a contact area which is being adapted to contact the edge region of the target multi-well plate for forming a sealing zone air-tightly sealing a void formed between the holder and the plate in holding position. Formed between the contact area and the edge region, the sealing zone surrounds the well region. The sealing zone may, e.g., include at least one sealing means such as a gasket, e.g., made of rubber, for air-tightly sealing the void.

The holder further includes at least one supporting face which is being adapted to support the well region in a planar condition. Accordingly, the at least one supporting face is being adapted to support a planar target multi-well plate. Otherwise, the at least one supporting face can be used to planarize (i.e. to make planar) a non-planar target multi-well plate (i.e. the non-planar well region thereof) by drawing the well region of the target multi-well plate plane onto the at least one supporting face. The target multi-well plate includes at least one structural component, in the following denoted as "spacer" adapted to contact the at least one supporting face of the holder in order to spatially separate an upper face of the multi-well plate from the at least one supporting face. The spacers can be embodied by at least some of the wells in which case outer walls of the wells contact the at least one supporting face. Alternatively or additionally, the target multi-well plate is provided with plural structural members such as struts projecting towards the at least one supporting face in holding position.

The holder yet further includes a duct for connection to a pump for generating a negative pressure in the air-tightly sealed void in order to pull the well region of the target multi-well plate onto the at least one supporting face. As above-detailed, in case of a non-planar plate, the at least one supporting face of the holder supports and planarizes the well region of the plate by generating a negative pressure in the void in-between the holder and the plate which is strong enough to make the well region of the plate to contact the at least one supporting face. Since the target multi-well plate normally is made of plastic material and has a plate height of a few millimetres, the plate usually has sufficient flexibility in order to enable the well region to be pulled onto the at least one supporting face. The plate may, e.g., include 96, 384 or 1536 wells which, e.g., may have an opening ranging from 0.5 to 2 millimetres. The pump may optionally also be used to generate a positive pressure in the void to remove the target multi-well plate from the holding position.

The system further includes at least one pipettor provided with at least one pipette for dispensing and aspirating fluids to/from the wells of the target multi-well plate held by the holder. It may be preferred that the pipettor includes a plurality of pipettes in order to enable plural pipetting operations in parallel. The pipettor has a predetermined spatial relationship with respect to the holder so that the plate has a predetermined spatial relationship with respect to the pipettor which facilitates pipetting operations. For example, a mount for fixing the pipettor (or for fixing a positioning means for positioning of the pipettor) can have a predefined spatial relationship with respect to the holder. Due to the predetermined spatial relationship between pipettor and target multi-well plate, it advantageously is not necessary to use dedicated means for detecting the position of the target multi-well plate such as optical detection means. Furthermore, due to the planarized multi-well plate in holding position, it advantageously is not necessary to use dedicated means for detecting the openings of wells which otherwise may vary with non-planarized convex or concave plates and can cause undesired contacts between the wells and the pipettes. Particularly in the case of pipettes enabling contact-free dispensation of fluids by the use of jets, it is known that the jets often are not exactly targeted to the centre of the wells thus entailing a risk of cross-contamination of fluids. Accordingly, in order to avoid such cross-contamination, it is important that a distance between the pipettes and the wells is small when fluids are dispended by jets. Hence, by planarizing the non-planar well region in holding position, the pipettes can advantageously be brought in a position close to the wells allowing for a very small distance between pipettes and wells of the target multi-well plate. Particularly, a distance between pipettes and an upper edge of the wells may, e.g., be chosen to be as small as + 2 to - 2 millimetres (in case of negative values the pipette tips protrude into the wells).

Otherwise it is also known, that fluids may be rebound from the inner walls of the wells by using fluid jets. Hence, the pipettes which can be brought close to the planarized target multi-well plate may also be used to shield adjacent wells from rebound fluid in order to avoid cross-contamination.

In a preferred embodiment of the invention, the pipettor includes one or more pipettes adapted for the contact-free dispensation of fluids by the use of fluid jets. In that case, a distance between the pipettes and opening of the wells preferably is chosen to be in a range of from +1 to -1 millimetres. In another preferred embodiment of the invention, the pipettor includes one or more pipettes adapted to shield adjacent wells from rebound fluid.

In a preferred embodiment of the invention which may be easily realized, the holder includes at least one planar surface used as the at least one supporting face for supporting the target multi-well plate which is being provided with plural grooves that are fluidically connected with respect to each other and are connected to the pump-connectable duct. In that, the supporting face may, e.g., be divided into plural supporting faces by the grooves separated with respect to each other. In that embodiment, it may be preferred to centrically arrange the pump-connectable duct with respect to the planar surface of the holder.

According to another preferred embodiment of the invention, the system includes a mechanism to control the temperature of the plate which may be embodied as a heating mechanism adapted to heat the target multi-well plate in holding position and/or a cooling mechanism adapted to cool the plate hold in holding position. Cooling of the target multi-well plate may be important in the case of comparably small volumes of fluids in order to reduce evaporation of the fluids. It may be highly advantageous to set the temperature of the plate to or at least close to the dew point of the ambient atmosphere. The temperature control mechanism may, e.g., include a heat transfer fluid such as water or any fluid such as gas made to stream in a dedicated fluidic system. Alternatively, the temperature control mechanism may, e.g., be embodied as thermoelectric device such as a Peltier device utilizing the Peltier effect which contacts the target multi-well plate in holding position. As is known to the skilled persons, when passing electric current through the Peltier device, depending on the direction of current applied, it functions as heat sink which absorbs heat to thereby cool the target multi-well plate or as heat source which releases heat to thereby heat the target multi-well plate.

According to a yet another preferred embodiment of the invention, the system includes an adapter for adapting the holding position to each of a plurality of target multi-well plates which are different in sizes with respect to each other so that the holder may be used to hold various target multi-well plates.

According to a yet another preferred embodiment of the invention, the system further includes an ejecting mechanism, adapted to eject the plate from the holding position. The ejecting mechanism may be embodied as mechanical ejector such as a movable plunger which can be moved to remove the plate from the holding position. Alternatively, a positive pressure may be generated in the void in-between the plate and the holder in order to remove the target multi-well plate from the holding position.

According to a yet another preferred embodiment of the invention, the system may further include at least one sensor selected from a presence sensor adapted to detect presence of the multi-well plate, a temperature sensor adapted to detect a temperature of the system, and a condensation sensor adapted to detect water as a result of condensation in the system.

According to a yet another preferred embodiment of the invention, the holder includes plural positioning means, in the following denoted as "positioners", adapted to position the target multi-well plate in the predefined holding position. The positioners may be movable towards or away from the target multi-well plate so that the holding position may be varied according to specific demands of the user. In that case, the system may further include pretensioning means such as springs adapted to pretension the target multi-well plate against the positioners.

According to a yet another preferred embodiment of the invention, the holder is supported by a substructure, such that the holder can be removed from the substructure as desired. In that case, it may be preferable that the substructure is being adapted to support the holder in at least two positions different with respect to each other. In that, the holder may, e.g., be fixed to the substructure in at least two positions being rotated with respect to each other by 90°. The system may also include a means for transferring the holder from one position to another such as a rotary table coupling the holder to the substructure.

According to a yet another preferred embodiment of the invention, the system further includes one or more source vessels for aspirating the fluids into the at least one pipette to be dispensed into the wells of the target multi-well plate. The one or more source vessels for aspirating fluids may, e.g., be embodied as a source multi-well plate, which, e.g., can be held in holding position by means of another holder similar in construction to the holder of the target multi-well plate. Accordingly, the source multi-well plate can be held in holding position by means of a negative pressure generated in a void formed between the source multi-well plate and its holder to thereby planarize a non-planar well region of the source multi-well plate.

According to a yet another preferred embodiment, the target multi-well plate is made of conductive material, e.g. plastic material provided with carbon elements such as particles or fibres to render it conductive, and is being electrically connected to the pipettor so that the target multi-well plate and the pipettor exhibit a same electrostatic potential.

According to a second aspect of the invention, a holder for holding at least one target multi-well plate in holding position is proposed. As above-detailed in connection with the first aspect of the invention, the target multi-well plate which is not part of the holder of the invention, however, optionally can be a part thereof, includes a well region provided with plural wells for accommodating one or more fluids and an edge region surrounding the well region. The holder has a contact area adapted to contact the edge region for forming a sealing zone that is air-tightly sealing a void formed between the holder and the plate. The holder includes at least one supporting face adapted to support the well region in a planar condition of the plate so as to support a planar multi-well plate, that is to say, to planarize the well region of a non-planar target multi-well plate by making the well region to contact the at least one supporting face. The holder further includes a duct for connection to a pump for generating a negative pressure in the void so as to pull the well region onto the at least one supporting face.

According to a third aspect of the invention, a new method for dispensing one or more fluids into wells of at least one target multi-well plate is proposed. The method includes a step of providing a holder for holding said at least one target multi-well plate in holding position. It includes another step of providing said target multi-well plate in holding position. As above-detailed in connection with the first and second aspects of the invention, the target multi-well plate includes a well region provided with plural wells for accommodating one or more fluids and an edge region surrounding the well region. The holder includes a contact area adapted to contact the edge region for forming a sealing zone that is air-tightly sealing a void formed between the holder and the plate. The holder further includes at least one supporting face adapted to support the well region in a planar condition of the well region of the plate so as to support a planar target multi-well plate or to planarize a non-planar target multi-well plate in making the well region of the plate to contact the at least one supporting face. The holder yet further includes a duct for connection to a pump for generating a negative pressure in the void so as to pull the well region onto the at least one supporting face. The method includes a further step of generating a negative pressure in the void in order to pull the well region onto the at least one supporting face.

The further includes a step of dispensing one or more fluids into one or more wells of the target multi-well plate.

In an embodiment of the invention, the method further includes a step of aspirating the fluid from one or more source vessels for dispensing into the one or more wells of the target multi-well plate. Specifically, the fluids are aspirated from the wells of a source multi-well plate. In the latter case, the method may include a step of providing another (second) holder for holding the source multi-well plate in holding position, wherein the second holder is similar in construction to the (first) holder for holding the target multi-well plate in holding position. It may include another step of providing the source multi-well plate in holding position and a yet further step of generating a negative pressure in the void in-between the source multi-well plate and the second holder in order to pull the well region onto the at least one supporting face of the second holder.

According to a yet another embodiment of the method of the invention, fluids are dispensed by jets, in which case, as above-detailed, narrow geometric tolerances facilitate the liquid handling.

According to a yet another embodiment of the method of the invention, dispensing and/or aspirating of fluids is performed by using tips (single-use tips or multi-use tips) wherein individual fluids are dosed on the bottom of the wells (i.e. drops are placed on the bottom of the wells) in which case narrow geometric tolerances also facilitate the liquid handling.

### BRIEF DESCRIPTION OF THE DRAWINGS

Other and further objects, features and advantages of the invention will appear more fully from the following description. The accompanying drawings, which are incorporated in and constitute a part of the specification, illustrate preferred embodiments of the invention, and together with the general description given above and the detailed description given below, serve to explain the principles of the invention.
- FIG. 1: is a schematic perspective view of an exemplary embodiment of the system of the invention;
- FIG. 2: is a schematic perspective view of an exemplary embodiment of the holder of the system of FIG. 1;
- FIG. 3: is a schematic perspective view of the holder of FIG. 2 provided with a multi-well plate in holding position;
- FIG. 4: is a sectional view of FIG. 3 according to line A-A;

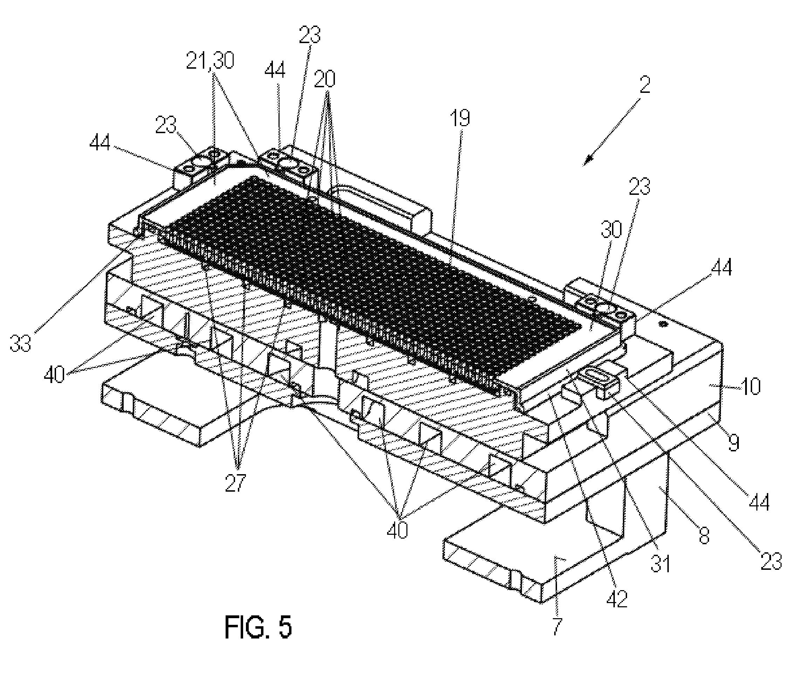

- FIG. 5: is a perspective sectional view of the holder of FIG. 3 according to line A-A.

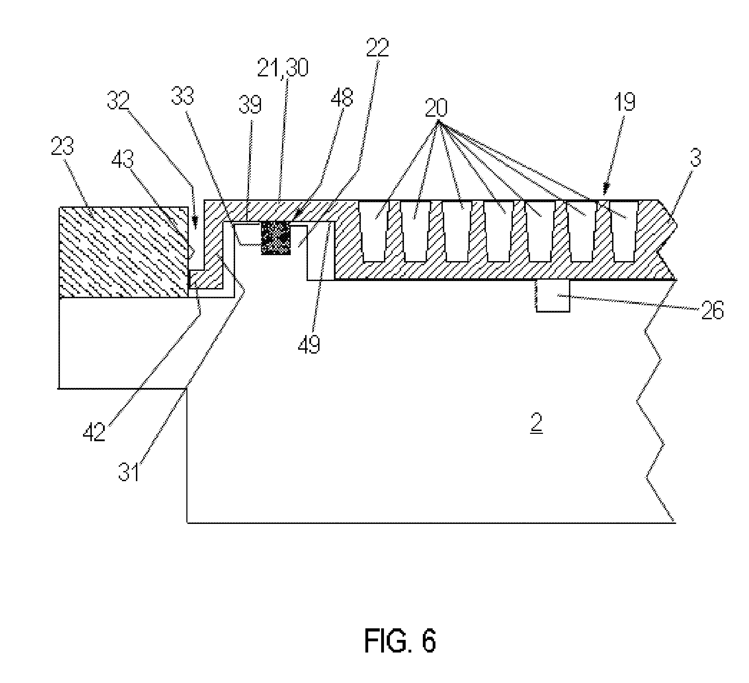

- FIG. 6: is an enlarged view of a detail of FIG. 4 il- lustrating the sealing zone;
- FIG. 7: is a schematic view of the system of FIG. 1 illustrating further exemplary components;
- FIG. 8: is another schematic view illustrating a variant of the system of FIG. 7;
- FIG. 9: is a yet another schematic view illustrating another variant of the system of FIG. 7.

### DETAILED DESCRIPTION OF THE INVENTION

By way of illustration, specific exemplary embodiments in which the invention may be practiced are described. In this regard, terminology with respect to orientations and directions such as "horizontal", "vertical", "upper", "lower", "medium" is used with reference to the orientation of the figures being described. Because components of the embodiment described can be positioned in a number of different orientations, this terminology is used for the purpose of illustration only and is in no way limiting.

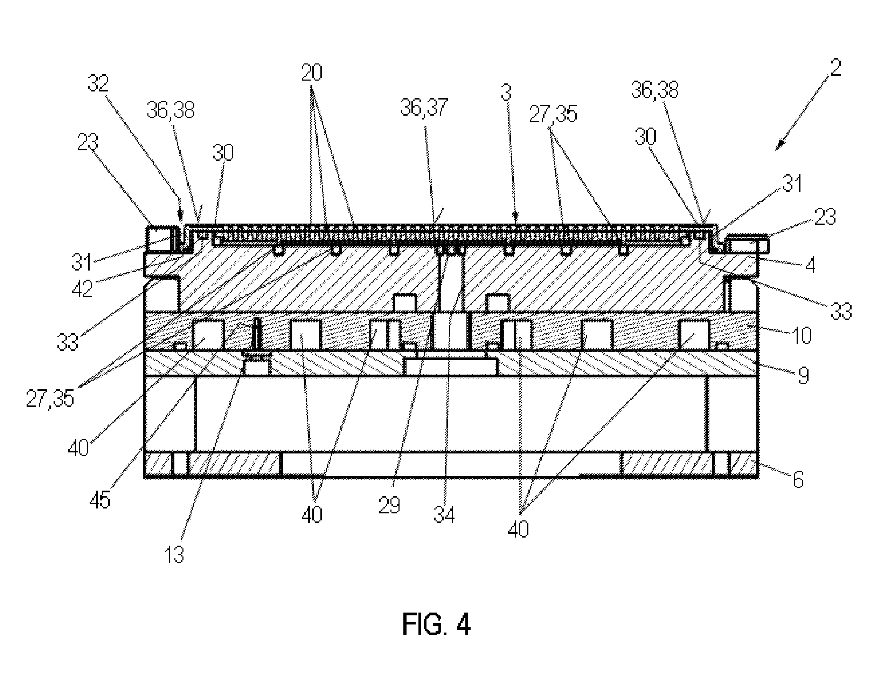

Accordingly, a system 1 for dispensing of fluids includes a holder 2 for holding a target multi-well plate 3 in a predefined holding position. The holder 2 is made up of a plate carrier 4 for holding the target multi-well plate 3 supported by a substructure 5 supporting the plate carrier 4. The substructure 5 is composed of several parts mounted one upon the other. Specifically, the substructure 5 includes a lower member 6 which has a rectangular base plate 7 provided with four pedestals 8 located at each corner of the base plate 7, a plate-like intermediate member 9 supported by the pedestals 8 of the lower member 6 and a plate-like upper member 10 supported by the intermediate member 9. Fixation of the members 6, 9, 10 is effected by means of a conventional fixation method such as welding or screwing. For instance, as indicated in FIG. 4, the intermediate member 9 is fixed to the upper member 10 by screws 13 which are being engaged with threaded holes 45. Alternatively, the substructure 5 may be a monolithic component.

The holder 2 made up of the plate carrier 4 and the substructure 5 is being fixed to a horizontal work-plate 11 by means of screws (not detailed) extending though bores 12 of the base plate 7.

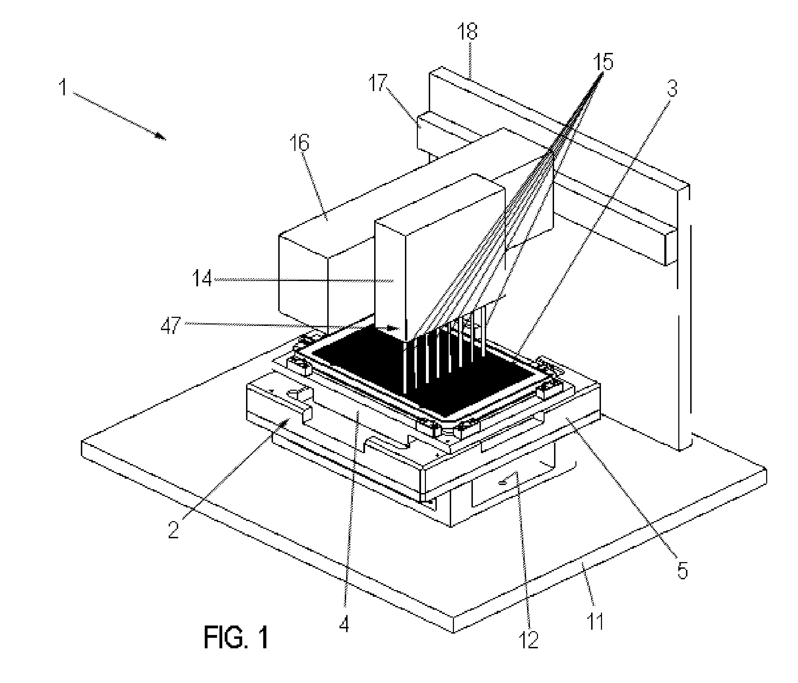

The system 1 includes a pipettor 47 provided with plural pipettes 15 serially arranged with respect to each other for aspirating or dispensing fluids. While a number of eight pipettes 15 are shown for the purpose of illustration only, it is to be appreciated that any other number of pipettes 15 may be envisaged in accordance with the specific demands of the user. The pipettor 47 is mounted to a transfer head 14 coupled to a transfer arm 16 which can be moved along a horizontal guiding rail 17 on a vertical rear wall 18 fixed to the work-plate 11. Accordingly, as schematically illustrated in FIG. 1, the pipettor 47 can be moved in a first direction of travel over the work-plate 11 by moving the transfer arm 16. The transfer head 14 can further be moved along the transfer arm 16 (not detailed in the figures) so that the pipettes 15 can also be moved in a second direction of travel over the work-plate 11 with the second direction of travel being perpendicular to the first direction of travel. Furthermore, the transfer head 14 can be moved in a third direction of travel vertical to both the first and second directions enabling the pipettes 15 to be moved towards and away from the multi-well plate 3. Since such positioning device is well-known to those of skill in the art, it need not be further elucidated herein. The pipettes 15 may, e.g., be adapted for the dispensation of fluids by the use of jets.

Being fixed to the vertical rear wall 18 and due to the fact that both the rear wall 18 and the holder 2 are being supported by the work-plate 11, the pipettor 47 including the pipettes 15 has a predefined spatial relationship with respect to the plate carrier 4. As above-detailed, the uppermost part of the holder 2 as given by the plate carrier 4 is for holding the target multi-well plate 3 in a predefined holding position. Accordingly, the target multi-well plate 3 in holding position has a predefined spatial relationship with respect to the pipettor 47.

The target multi-well plate 3 which in top view is rectangular in shape includes an inner well region 19 provided with plural wells 20 for receiving fluids and an outer edge region 21 free of wells 20 surrounding the well region 19. Specifically, the edge region 21 forms a right-angled plate portion comprised of a horizontal part 30 and a vertical part 31. The well region 19 is provided with a comparably large array of, e.g., 1536 wells including 32 columns and 48 rows intersecting each other at right angles.

The plate carrier 4 is provided with a (horizontal) planar top surface 24 which being rectangular in shape is surrounded by a rectangular vertical frame 22. Eight positioners 23 are mounted outside the frame 22 with two positioners 23 being respectively placed on a same side of the rectangular frame 22 leaving a small gap 32 in-between the frame 22 and the positioners 23. An upper frame face 39 of the frame 22 is adapted to support a lower face 49 of the horizontal part 30 of the edge region 21 of the target multi-well plate 3 with the vertical part 31 thereof being accommodated in the gap 32. Specifically, a shoulder 42 formed on the outer side of the vertical part 31 of the edge region 21 contacts a stop face 43 of each of the positioners 23 so as to position the target multi-well plate 3 in the predefined holding position.

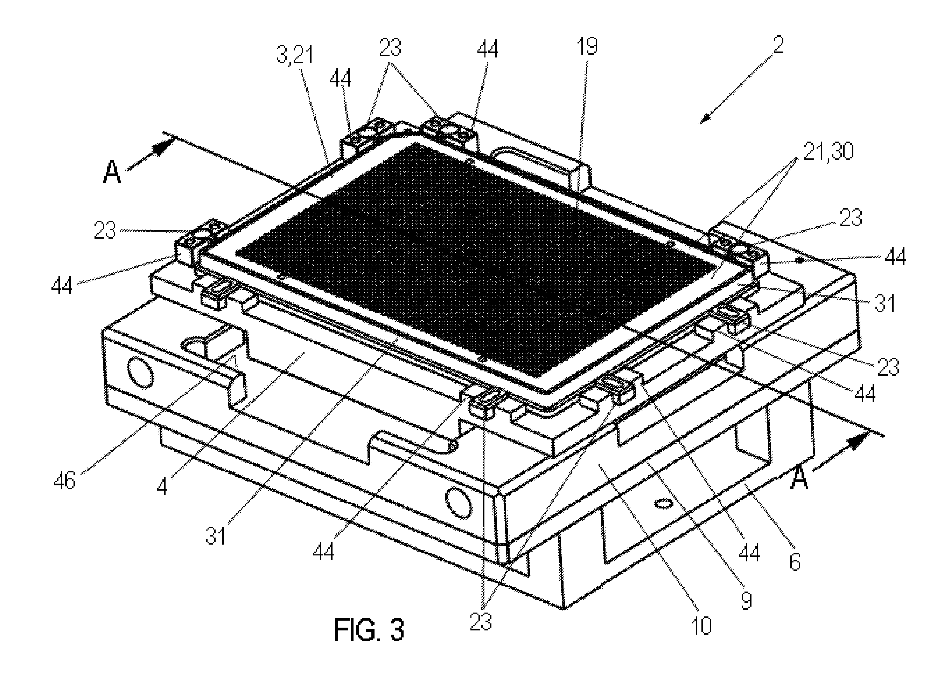

Moreover, four positioners 23 placed at two non-opposing sides of the frame 22 (which are nearer to the viewer in FIGS. 1 to 3) can be linearly moved towards and away from the plate 3 within their seats 44 so that the predefined holding position of the plate 3 can be varied as desired. Otherwise, the holding position can be readily adapted to various target multi-well plates 3 different in sizes with respect to each other. Since the holder 2 is fixed to the work-plate 11, due to the predefined holding position as given by the positioners 23, the target multi-well plate 3 has a predefined spatial relationship with respect to the pipettor 47 which facilitates pipetting operations.

A closed-loop sealing gasket 33, e.g. made of rubber, is pinched in-between the frame 22 and the lower face 49 of the horizontal part 30 of the edge region 21 so as to form an air-tight sealing zone 48 between the target multi-well plate 3 and the plate carrier 4 of the holder 2. Specifically, the sealing gasket 33 is accommodated in a flute 41 worked in the upper frame face 39 of the frame 22 so as to surround the well region 19 of the multi-well plate 3. Accordingly, the gasket 33 and the upper frame face 39 together form an area for contacting the lower face 49 of the horizontal part 30 of the edge region 21 (in the introductory portion called "contact area").

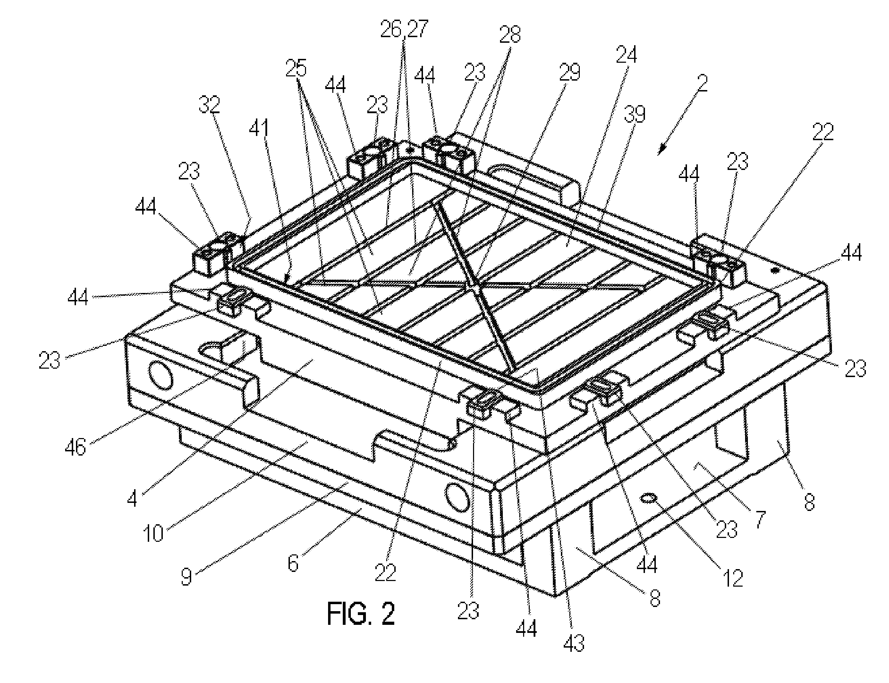

As illustrated in top view in FIG. 2, a plurality of grooves 26 is being worked in the top surface 24 of the plate carrier 4. The grooves 26 which extend over the major part of the top surface 24 include plural parallel grooves 27 with are in parallel alignment with respect to each other and two diagonal grooves 28 crossing the parallel grooves 27 so that an fluidically inter-connected structure of grooves 26 is created. The two diagonal grooves 28 cross at centre hole 29. By incorporating the grooves 26 into the top surface 24, the top surface 24 is divided into plural separate portions each of which serving as supporting face 25 to support the well region 19 of the target multi-well plate 3. Accordingly, an air-tightly sealed void 35 is formed between the multi-well plate 3 and the plate carrier 4. The void 35 includes the grooves 26 at the least, but in case of a convex-shaped plate 3 may also include a hollow space between the top surface 24 of the plate carrier 4 and a lower side of the plate 3.

The centre hole 29 in which the diagonal grooves 28 intersect with each other is connected to a centric vertical duct 34 comprised of several through-holes (not further detailed) introduced into the plate carrier 4 and the various members 6, 9, 10 of the substructure 5. The through-holes are vertically aligned with respect to each other. The duct 34 can be connected to a pump (not shown) for generating a negative or positive pressure in the air-tightly sealed void 35 between the target multi-well plate 3 and the plate carrier 4.

By generating a negative pressure in the void 35, the well region 19 of the multi-well plate 3 can be pulled towards the plate carrier 4 in order to be fixed in holding position. Furthermore, in case of a non-planar plate 3, e.g., having a convex-shaped upper plate face 36, wells 20 of the well region 19 are made to butt against the supporting faces 25 so as to planarize the well region 19 of the plate 3 and to create a planar upper plate face 36 of the target multi-well plate 3 accommodating the openings of the wells 20. In other words, making the lower sides of the wells 20 to contact the supporting faces 25, the upper plate face 36 of the plate 3 is brought in a planar shape without having any concave or convex portions. Specifically, a vertical distance between a first upper face portion 37 of the upper plate face 36 at the well region 19 and the supporting faces 25 is adapted to a distance between a second upper face portion 38 of the upper plate face 36 at the edge region 20 and the upper frame face 39 of the frame 22 so as to have a planar upper plate face 36 of the plate 3. Hence, in case of a non-planar plate 3, the plate 3 can be planarized by generating a negative pressure in the void 35 in order to make the wells 20 contact the supporting faces 25. The plate 3, e.g., is made of plastic material having a plate height of a few millimetres, e.g. 3-8 mm, exhibiting sufficient flexibility to be planarized by generating a negative pressure in the void 35.

The plastic-made plate 3 may include electrically conductive compounds such as carbon particles or carbon fibres in order to render the plate 3 electrically conductive. In that case, the plate 3 may be electrically connected to the pipettor 47 so that the plate 3 and the pipettor 47 exhibit a same electric potential. Particularly, the wells 20 butting against the supporting faces 25 act as spacers spatially separating the upper plate face 36 from the supporting faces 25. While not shown in the figures, the plate 3 may alternatively or additionally be provided with dedicated structural elements for contacting the supporting faces 25 such as struts, e.g., arranged in-between the wells 20 which in holding position project towards the supporting faces 25. It goes without saying that a width of the grooves 26 as seen in a direction perpendicular to the extension thereof is sufficiently small to avoid any bending of the plate 3 by pulling the well region 19 onto the supporting faces 25 by effect of negative pressure in the void 35.

The system 1 further includes a temperature control mechanism for controlling temperature of the plate 3. Specifically, the upper member 10 is provided with plural channels 40 in parallel alignment which, e.g., can be filled with heated or cooled fluid such as water or gas in order to control temperature of the plate 3. The plate 3 may, e.g., be heated or cooled by the temperature control mechanism in order to raise or lower the temperature of the plate 3. Otherwise, the temperature of the plate 3 may be kept constant. The upper member 10 and the plate carrier 4 are made of material having good thermal conductivity in order to transfer thermal energy to/from the plate 3. They may, e.g., be made of metallic material. The channels 40 may, e.g., be connected to an output of a cooling air generation device for generating cooling air. The temperature of the plate 3 preferably is controlled to correspond or to be close to the dew point of the surrounding atmosphere. Alternatively, the system may include a thermoelectric temperature control device such as a Peltier device utilizing the Peltier effect which contacts the target multi-well plate 3 in holding position (not illustrated).

The system 1 further includes an ejecting mechanism, adapted to eject the plate 3 from the holding position which may be embodied by generating a positive pressure in the void 35 via the centric duct 34. Alternatively, the ejecting mechanism may be embodied by a mechanical ejector such as a movable plunger (not illustrated).

The system 1 may also include a presence sensor adapted to detect presence of the target multi-well plate 3 and/or a temperature sensor adapted to detect a temperature of the system 1 and/or a condensation sensor adapted to detect water as a result of condensation in the system 1.

In the system 1, the plate carrier 4 is supported by the substructure 5, wherein the plate carrier 4 is accommodated in a recess 46 of the upper member 10. The plate carrier 4 may thus be readily removed from the substructure 5. Alternatively, the plate carrier 4 can be accommodated in another position within the recess 46 being turned by 90° with respect to the first position. Accordingly, the recess 46 of the upper member 10 is adapted to accommodate the plate carrier 4 in two positions so that the plate may be rotated by 90°. While not shown in the figures, the system 1 may further include a transfer means for transferring the plate carrier 4 between both positions such as a rotary table.

The system 1 can, e.g., be used for the dispensation of fluids using fluid jets. Due to the planarized plate 3 fixed to the plate carrier 4 by generating a negative pressure in the void 35, the pipettes 15 can be brought very close to the wells 20 so that the pipettes 15 may, e.g., have a distance of +1 mm to -1 mm from the upper plate face 36 of the plate 3. Accordingly, fluids can be reliably pipetted even in case of relatively small openings of wells 20 usually present in multi-well plates 3 provided with a large number of, e.g., 1536 wells 20. Accordingly, the system 1 enables contact-free dispensation of fluids without a risk of cross-contamination of fluids due to not exactly targeted fluid jets and/or expanding of jets towards the wells 20. Furthermore, the pipettes 15 may be adapted to shield adjacent wells from fluid rebound from the inner walls of the wells 20 in order to avoid cross-contamination.

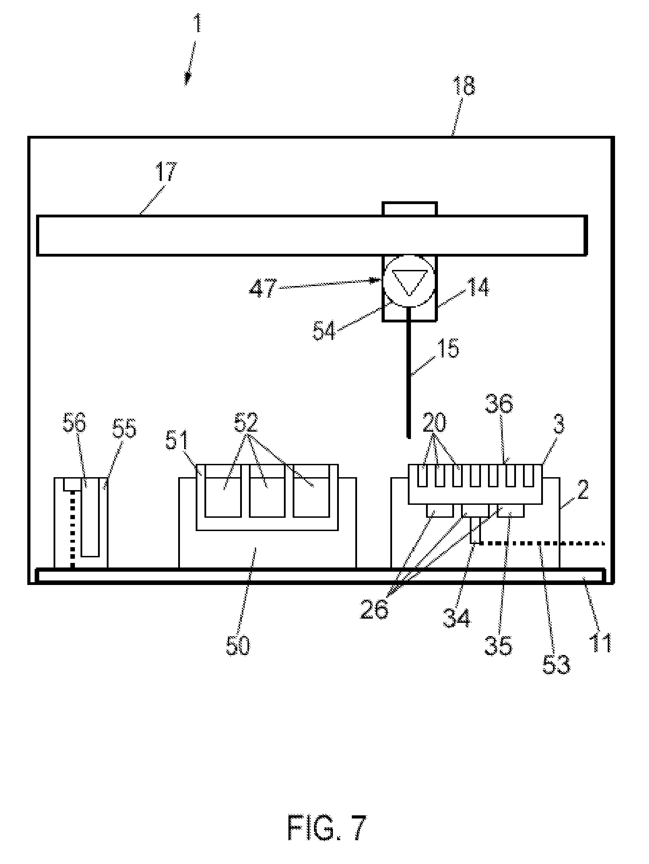

With particular reference to FIG. 7, further exemplary components of the system 1 now are explained. Accordingly, the system 1 includes a solid support 50 fixed to the work-plate 11 for supporting one or more source vessels 51 in a manner to enable access of the pipettes 15. Specifically, the support 50 can be used to support one source vessel 51 or a plurality of individual source vessels 51 such as bottles or cartridges. It can also be used to support a one-piece vessel array provided with plural source vessels 51, e.g., embodied as a source multi-well plate different from or similar to the target multi-well plate 3 fixed by the holder 2. The source multi-well plate may, e.g., include a number of 12, 24, 48 or 96 wells. While only three source vessels 51 are shown for the purpose of illustration only, those of skill in the art will appreciate that more or less source vessels 51 can be envisaged according to the specific demands of the user.

Generally, the one or more source vessels 51 of the support 50 can receive and/or be pre-filled with fluids 52 such as liquid samples or liquid reagents prior to their use in various analyses and/or reactions. As used herein, the term "reagent" includes any fluid of interest, e.g., dilutants. In the more strict sense of the term, reagents are fluids enabling reactions with liquid samples, e.g., analyte-specific reactions for sample analysis.

In the system 1, the target multi-well plate 3 is precisely fixed to the holder 2 in a pre-defined position by generating a negative pressure in the void 35 which as above-detailed effects planarization of the upper plate face 36. FIG. 7 schematically illustrates a pressure line 53 for generating a negative or positive pressure in the grooves 26. Specifically, the pressure line 53 connects the duct 34 with a pump (not illustrated) for generating a positive or negative pressure in the grooves 26 which are in fluid communication with the duct 34. The pressure line 53 may, e.g., be embodied as tube to evacuate the void 35 below the target multi-well plate 3. For example, a negative pressure in a range of from -50 to -950 mbar, more preferably in a range of from -100 to -800 mbar, below ambient pressure is generated in the void 35.

The pipettes 15 can be used to transfer one or more fluids from the source vessels 51 to the target multi-well plate 3 by making the pipettes 15 dip into the fluids 52 contained in the vessels 51, followed by aspirating the fluids 52, moving the pipettes 15 to the target multi-well plate 3 and dispensing the fluids 52 into the wells 20. Due to the fact that the planarized target multi-well plate 3 is precisely fixed to the holder 2 in a pre-defined position, the pipettes 15 can be lowered until there is only a very small distance of, e.g., less than 1 mm left between the orifices of the pipettes 15 and the openings of the wells 20. The orifices of the pipettes 15 can, e.g., be aligned with the upper plate face 36 accommodating the orifices of the wells 20 or may even dip into the wells 20. Accordingly, highly-precise pipetting operations of fluids 52 can be performed even in case of dispensing the fluids 52 into relatively small openings of the wells 20 which typically are present in standard multi-well plates having a relatively large number of, e.g., 1536 wells.

Specifically, the pipettes 15 can be used to transfer one or more liquid samples to be analyzed (count of liquid samples to be analyzed = N) from N source vessels 51 to the wells 20 of the target multi-well plate 3. Each sample can be distributed to several wells 20. So called aliquots of each sample are generated. The count of aliquots per sample being M. Resulting N x M filled target wells 20. In a set of M wells 20, in the target multi-well plate 3, whereto one single sample to be analyzed has been distributed (aliquoted), M different reagents may be present, each reagent allowing a specific analysis, allowing one sample to be analyzed for M parameters, e.g. allowing one sample to analyzed for M genetic subtypes, for M pathogens or for generating an expression profile of M parameters.

The reagents present in the target multi-well 3 plate may be pre-dispensed and dried, or else pre-administered. E.g. M different reagents may be distributed each to N wells. Allowing N samples to be analyzed for M parameters.

In some cases the target multi-well plate 3 may be preloaded with one to more reagents and only samples to be analyzed are transferred to the target multi-well plate 3 by the pipettes 15.

In some cases the target multi-well plate 3 may be preloaded with one to more samples to be analyzed and only reagents which are used to analyze the sample are transferred to the target multi-well plate 3 by the pipettes 15.

Yet alternatively, in a first pipetting sequence, one or more liquid samples to be analyzed (count of liquid samples to be analyzed = N) are each transferred from the N source vessels 51, to one to more destination wells 20 (count of aliquots per sample = M) of the target multi-well plate 3 (= for each of the N samples M wells are filled with sample = N x M wells) . In a second pipetting sequences, to each of the M aliquots of one single sample a different reagent is added (number aliquots per sample = number of reagents added = M). The two sequences result in a set of mixtures (count of mixtures = N x M), wherein each of the N samples is mixed with M reagents, each mixture being present in a separate well 20 (N x M wells).

Sample to be analyzed and reagents may also be transferred in opposite order. Also controls and replications may be pipetted. Generally, each sample can be analyzed for one or more analytes. Specifically, N samples can be analyzed for M analytes. More specifically, a set of N x M mixtures contained in N x M wells 20 can be generated. N, M being natural numbers which are equal or different with respect to each other.

As illustrated in FIG. 7, the pipettor 47 is mounted to a transfer head 14 which can be moved along the horizontal guiding rail 17 on the vertical rear wall 18 so as to move the pipettor 47 over the work-plate 11. A transfer arm (not illustrated) guided by the horizontal guiding rail 17 can be used to move the pipettor 47 in a direction perpendicular thereto to move the pipettor 47 in a plane over the work-plate 11. As usual, the pipettes 15 can also be moved towards and away from the target multi-well plate 3. The pipettor 47 includes an actuator 54 which can be operated to aspirate or dispense, e.g. in a dosed manner, fluids 52 by use of the pipettes 15. Specifically, the actuator 54 may, e.g., be embodied as displacement pump such as a pump of the rotary displacement pump type or as piezo actuator provided with a piezo element for the contactless liquid dispense. More specifically, the actuator 54 may be a combination of several fluid actuators and valves. The actuator 54 can, e.g., be used to pipette liquid fluids such as samples, reagents, water, cleaning fluids, system fluids and gaseous fluids such as air.

Each source vessel 51 typically includes a volume of fluid 52 sufficient to perform a pre-defined number of analyses and/or reactions, e.g., for analytical purposes. Specifically, each source vessel 51 may, e.g., include a fluid volume in a range of from 50 µl to 50 ml, preferably in a range of from 100 µl to 5 ml. For one analysis, a fluid volume, e.g., in a range of from 0.25 µl to 1000 µl, specifically in a range of from 0.25 µl to 200 µl and more specifically in a range of from 0.5 µl to 25 µl can be used.

Due to the fact that the openings of the source vessels 51 typically are much larger than the openings of the wells 20 of the target multi-well plate 3, positioning of the source vessels 51 as precise as that of the target multi-well plate 3 usually is not required. Otherwise, smaller vessels 51 having smaller openings as low as those of the target multi-well plate 3 can be envisaged. In this case, instead of the support 50, another (second) holder 2 can be used to precisely fix the source vessels 51 similar to the source multi-well plate in a pre-defined position. In the latter case, the source vessels 51 preferably are embodied as source multi-well plate, wherein the source multi-well plate can be similar to or different from the target multi-well plate 3. By generating a negative pressure, planarization of the upper plate face and precise positioning of the source multi-well plate can be obtained in analogous manner enabling highly-precise pipetting operations of fluids contained in the source vessels 51.

The system 1 may further include a washing station 55 for washing the pipettes 15 from residuals of the pipetted fluids 52 such as sample(s) and/or reagent(s). Depending on the specific implementation, the pipettes 15 can dip into washing fluid (not illustrated) contained in a cavity 56 of the washing station 55 to aspirate the washing fluid, followed by dispensing the washing fluid into the cavity 56. Alternatively, washing fluid such as system fluid can be dispensed only into the cavity 56. The pipettes 15 can also get dried in the washing station 55, if required. Washing of the pipettes 15 can, e.g., be performed in-between consecutive pipetting operations.

In case the pipettes 15 are adapted to use pipette tips intended for single-use only, the used pipette tips can be discharged into a waste container (not illustrated) which, e.g., may be located adjacent the washing station 55. It may also include a tip rack provided with fresh pipette tips which may be picked up by the pipettes 15.

In the system 1, after performing pipetting operations for further processing (e.g. visual inspection, sealing, execution of reaction, analysis of reaction products), the target multi-well plate 3 can be manually or automatically transferred to an instrument related to one or more analytical methods located outside the system 1 to thereby obtain a analytical result, e.g., with respect to one or more analytes contained in the samples. Alternatively, the system 1 of the invention can be provided with one or more instruments which can be related to one or more analytical methods such as the polymerase chain reaction or any other reaction of the nucleic acid amplification type.

Specifically, the system 1 may, e.g., include a handler for handling the target multi-well plate 3 in the system 1. The system 1 may, e.g., include a preparator for preparing samples to perform a reaction of the nucleic acid amplification type including a sealer for providing the target multi-well plate 3 with a sealing cover such as a sealing foil and an incubator for extracting nucleic acids. The system 1 may, e.g., include a thermo-cycler for thermally cycling sample-reagent mixtures contained in the target multi-well plate 3 through a series of temperature excursions for performing the polymerase chain reaction. The system 1 may further include one or more fluorometers for the optical detection of the results of the polymerase chain reaction. Specifically, when using an optically transparent sealing cover, the system 1 can be used to perform real-time polymerase chain reaction by detecting the reaction products through the sealing cover during the progress of the polymerase chain reaction.

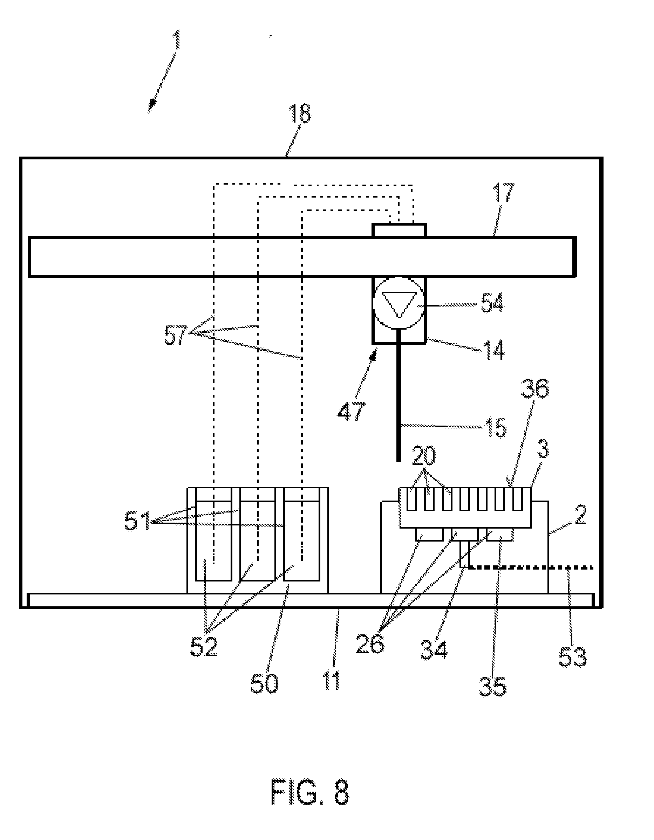

With particular reference to FIG. 8, a variant of the system 1 of FIG. 7 is explained. In order to avoid unnecessary repetitions, only differences with respect to FIG. 7 are explained and otherwise reference is made to explanations in connection with FIG. 7. Accordingly, the pipettor 47 is provided with plural flexible tubing 57 connecting the pipettes 15 with the source vessels 51 on the support 50 containing fluids 52 such as reagents and/or samples and/or cleaners via the actuator 54. Specifically, the fluids 52 can be aspirated through the tubing 57 by action of the actuator 54 to be successively dispensed by the pipettes 15 into the wells 20 of the target multi-well plate 3. While only three tubing 57 are shown for the purpose of illustration only, those of skill in the art will appreciate that more or less tubing 57 can be envisaged according to the specific demands of the user. While only a one-to-one connection with respect to the vessels 51 and the pipettes 15 is illustrated in FIG. 8, a plural-to-one connection, a one-to-plural connection or a plural-to-plural connection with respect to the vessels 51 and the pipettes 15 can be envisaged according to the specific demands of the user.

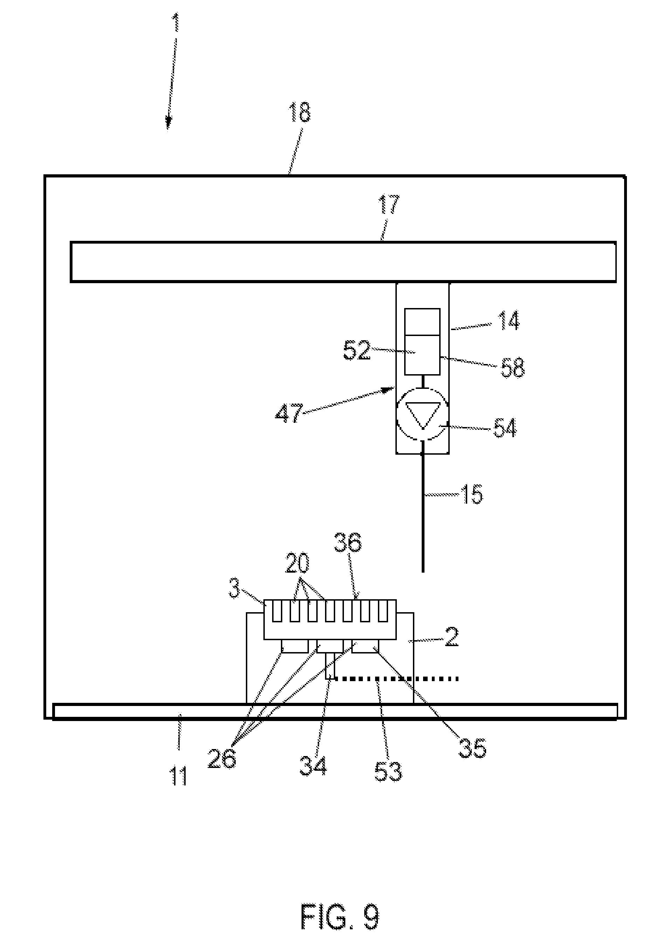

With particular reference to FIG. 9, another variant of the system 1 of FIG. 7 is explained. In order to avoid unnecessary repetitions, only differences with respect to FIG. 7 are explained and otherwise reference is made to explanations in connection with FIG. 7. Accordingly, instead of plural source vessels 51 held on the support 50, one or more containers 58 containing fluids 52 such as reagents and/or samples are integrated within the pipettor 47 one of which is shown for the purpose of illustration only. Specifically, the one or more containers 58 are directly connected to the actuator 54 for successively dispensing fluid(s) by the pipettes 15.

Accordingly, in the present invention, due to a precise position of the target multi-well plate 3 and optionally the source vessels 51 (e.g. source multi-well plate) relative to the pipettor 47, combined with evenness of the upper plate face 36 caused by planarizing the target multi-well plate 3 by fixing to the holder 2 (and optionally the source multi-well plate by fixing to another holder 2), the pipettes 15 can be moved very close to the wells 20 thus enabling highly-precise pipetting operations even in the case of relatively small openings of the wells 20. The invention is especially useful in the case of dispensing fluids by jets typically having a conically shaped beam which may be prone to cross-contamination.

Obviously many further modifications and variations of the present invention are possible in light of the above description. It is therefore to be understood, that within the scope of appended claims, the invention may be practiced otherwise than as specifically devised.

### Reference list

- 1: System
- 2: Holder
- 3: Target multi-well plate
- 4: Plate carrier
- 5: Substructure
- 6: Lower member
- 7: Base plate
- 8: Pedestal
- 9: Intermediate member
- 10: Upper member
- 11: Work-plate
- 12: Bore
- 13: Screw
- 14: Transfer head
- 15: Pipette
- 16: Transfer arm
- 17: Guiding rail
- 18: Rear wall
- 19: Well region
- 20: Well
- 21: Edge region
- 22: Frame
- 23: Positioner
- 24: Top surface
- 25: Supporting face
- 26: Groove
- 27: Parallel groove
- 28: Diagonal groove
- 29: Centre hole
- 30: Horizontal part
- 31: Vertical part
- 32: Gap
- 33: Gasket
- 34: Duct
- 35: Void
- 36: Upper plate face
- 37: First upper face portion
- 38: Second upper face portion
- 39: Upper frame face
- 40: Channel
- 41: Flute
- 42: Shoulder
- 43: Stop face
- 44: Seat
- 45: Threaded hole
- 46: Recess
- 47: Pipettor
- 48: Sealing zone
- 49: Lower face
- 50: Support
- 51: Source vessel
- 52: Fluid
- 53: Pressure line
- 54: Actuator
- 55: Washing station
- 56: Cavity
- 57: Tubing
- 58: Container

## Claims

1. A system (1) for dispensing one or more fluids (52) into wells (20) of at least one target multi-well plate (3), comprising:
a holder (2) for holding said multi-well plate (3) in a predefined holding position, said holder (2) including: a contact area (33, 39) adapted to contact an edge region (21) of said plate (3) for forming a sealing zone (48) air-tightly sealing a void (35) formed between said holder (2) and said plate (3); at least one supporting face (25) adapted to support a well region (19) of said plate (3) in a planar condition, said well region (19) being provided with a plurality of said wells (20) and surrounded by said edge region (21) ; and a duct (34) for connection to a pump for generating a negative pressure in said void (35) so as to pull said well region (19) onto said at least one supporting face (25) ;
at least one pipettor (47) provided with at least one pipette (15) for dispensing said fluids (52) to said wells (20), wherein said pipettor (47) has a predetermined spatial relationship with respect to said holder (2) so that said plate (3) has a predetermined spatial relationship with respect to said pipettor (47).

2. The system (1) according to claim 1, wherein said holder (2) includes a planar surface (24) provided with plural grooves (26) connected with respect to each other and connected to said duct (34).

3. The system (1) according to claim 2, wherein said duct (34) is centrically arranged with respect to said planar surface (24) .

4. The system (1) according to any one of the preceding claims 1 to 3, wherein said sealing zone (48) includes at least one sealing means (33) for air-tightly sealing said void (35).

5. The system (1) according to any one of the preceding claims 1 to 4, wherein said at least one supporting face (25) is being adapted to support at least some of said wells (20).

6. The system (1) according to any one of the preceding claims 1 to 5, wherein said pipettor (47) includes plural pipettes (15).

7. The system (1) according to any one of the preceding claims 1 to 6, wherein said holder (2) includes a temperature control mechanism adapted to control a temperature of said plate (3).

8. The system (1) according to any one of the preceding claims 1 to 7, wherein said holder (2) includes an adapter for adapting said holding position to each of a plurality of multi-well plates (3) being different in sizes with respect to each other.

9. The system (1) according to any one of the preceding claims 1 to 8, further including an ejecting mechanism adapted to eject said plate (3) from said holding position.

10. The system (1) according to any one of the preceding claims 1 to 9, wherein said holder (2) is supported by a substructure (5) in such a manner that the holder (2) can be removed from the substructure (5).

11. The system (1) according to claim 10, wherein said substructure (5) is being adapted to support said holder (2) in at least two positions different with respect to each other.

12. The system (1) according to any one of the preceding claims 1 to 11, further including one or more source vessels (51) for aspirating said fluids (52) into said at least one pipette (15).

13. A holder (2) for holding at least one target multi-well plate (3) in a predefined holding position, including:
a contact area (33, 39) adapted to contact an edge region (21) of said plate (3) for forming a sealing zone (48) air-tightly sealing a void (35) formed between said holder (2) and said plate (3) in holding position;
at least one supporting face (25) adapted to support a well region (19) in a planar condition, said well region (19) being provided with a plurality of said wells (20) and being surrounded by said edge region (21);
a duct (34) for connection to a pump for generating a negative pressure in said void (35) so as to pull said well region (19) onto said at least one supporting face (25).

14. A method for dispensing one or more fluids (52) into wells (20) of at least one target multi-well plate (3), comprising the following steps of:
- providing a holder (2) for holding said target multi-well plate (3) in a predefined holding position; (3)
- providing said target multi-well plate (3) in said holding position, wherein a void (35) is formed between said holder (2) and said plate (3), said void (35) being air-tightly sealed by a sealing zone (48) formed between said holder (2) and an edge region (21) of said plate (3);
- generating a negative pressure in said void (35) so as to pull a well region (19) of said plate (3) provided with a plurality of said wells (20) and surrounded by said edge region (21) onto at least one supporting face (25) adapted to support said well region (19) in a planar condition;
- dispensing said fluids (52) into one or more wells (20) of said target multi-well plate (3).

15. The method according to claim 14, wherein said fluids (52) are aspirated from one or more source vessels (51) for dispensing into said one or more wells (20) of said target multi-well plate (3).
